(19)

Europäisches
Patentamt
European
Patent Office
Office européen
des brevets

(11) **EP 4 164 217 A1**

(12) **EUROPEAN PATENT APPLICATION**
published in accordance with Art. 153(4) EPC

(43) Date of publication:
**12.04.2023 Bulletin 2023/15**

(21) Application number: **21926048.6**

(22) Date of filing: **22.11.2021**

(51) International Patent Classification (IPC):
**H04N 9/73** (2006.01)

(86) International application number:
**PCT/CN2021/132137**

(87) International publication number:
**WO 2023/024286 (02.03.2023 Gazette 2023/09)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.08.2021   CN 202110971603**

(71) Applicant: **Shenzhen Skyworth-RGB Electronic
Co., Ltd.
Shenzhen, Guangdong 518057 (CN)**

(72) Inventors:
• **FU, Jinxue
  Shenzhen
  Guangdong 518057 (CN)**

• **WU, Xiaoxia
  Shenzhen
  Guangdong 518057 (CN)**
• **ZHOU, Xuan
  Shenzhen
  Guangdong 518057 (CN)**
• **CHEN, Hongbo
  Shenzhen
  Guangdong 518057 (CN)**

(74) Representative: **Osterhoff, Utz
  Bockermann Ksoll
  Griepenstroh Osterhoff
  Patentanwälte
  Bergstraße 159
  44791 Bochum (DE)**

(54) **WHITE BALANCE CONTROL METHOD AND APPARATUS, AND TERMINAL DEVICE AND STORAGE MEDIUM**

(57)    A white balance control method includes: acquiring a target pixel value of a target white point in a target image (S11); calculating a target pixel sum value corresponding to a preset color temperature zone by using the target pixel value (S12); obtaining a pixel gain value based on the target pixel sum value and a preset weight corresponding to the preset color temperature zone (S13); and performing white balance adjustment on the target image by using the pixel gain value to obtain a result image (S14). This application also discloses a white balance control apparatus, a terminal device and a computer readable storage medium. With the methods in this application, the target pixel value will not be affected by the interfering color blocks in the target image, making the accuracy of the pixel gain value higher, making the white balance of the result image accurate and avoiding the color cast of the result image.

FIG. 2

EP 4 164 217 A1

**Description**

**CROSS REFERENCE TO RELATED APPLICATIONS**

This application claims priority to Chinese Patent Application No. 202110971603.6, titled "WHITE BALANCE CONTROL METHOD AND APPARATUS, TERMINAL DEVICE, AND STORAGE MEDIUM" and filed with the Chinese Patent Office on August 23, 2021, which is incorporated herein by reference in its entirety.

**TECHNICAL FIELD**

The present disclosure relates to the field of image processing, and in particular to a white balance control method and a white balance control method apparatus, a terminal device, and a computer readable storage medium.

**BACKGROUND**

The basic concept of white balance refers to "a white object can be restored to white at any light source color temperature". The color cast phenomenon occurs when shooting under a specific light source, and it is compensated by strengthening the corresponding complementary color.
Automatic white balance control may restore the image to a normal color image at different color temperatures. In the related technology, a white balance control method is disclosed, which uses the gray world method, the color temperature curve method or the perfect reflection method to control the white balance.
However, there is still color cast phenomenon with the existing white balance control methods.

**SUMMARY**

**TECHNICAL PROBLEM**

A main object of this application is to provide a white balance control method and apparatus, a terminal device, and a computer readable storage medium, aiming at solving the technical problem that the existing white balance control methods still have color cast phenomenon in the related art.

**TECHNICAL SOLUTION**

In order to achieve the above object, a white balance control method is provided in this application, the method including the following steps:

acquiring a target pixel value of a target white point in a target image;

calculating a target pixel sum value corresponding to a preset color temperature zone by using the target pixel value;

obtaining a pixel gain value based on the target pixel sum value and a preset weight corresponding to the preset color temperature zone; and

performing white balance adjustment on the target image by using the pixel gain value to obtain a result image.

In an embodiment, the target image is acquired by a target camera, and before the acquiring the target pixel value of the target white point in the target image, the method further includes:

performing curve calibration and fitting on the target camera by using a preset color temperature lamp corresponding to a preset color temperature range to obtain a target Planck color temperature curve of the target camera; and

obtaining the preset color temperature zone based on the target Planck color temperature curve,

the acquiring the target pixel value of the target white point in the target image includes:

determining a pixel point in the target image whose pixel value matches the target Planck color temperature curve as the target white point; and

acquiring the target pixel value of the target white point.

In an embodiment, before the obtaining the pixel gain value based on the target pixel sum value and the preset weight corresponding to the preset color temperature zone, the method further includes:

counting a number of white points of target white points in the preset color temperature zone; and

adjusting the preset weight by using the number of white points, a preset maximum number of white points and a preset minimum number of white points to obtain an actual weight corresponding to the preset color temperature zone,

the obtaining the pixel gain value based on the target pixel sum value and the preset weight corresponding to the preset color temperature zone includes:
obtaining a pixel gain value based on the target pixel sum value and the actual weight.

In an embodiment, the obtaining the pixel gain value based on the target pixel sum value and the actual weight includes:

obtaining a result pixel sum value based on the target pixel sum value and the actual weight; and

obtaining the pixel gain value based on the result pixel sum value.

In an embodiment, the adjusting the preset weight by using the number of white points, the preset maximum number of white points and the preset minimum number of white points to obtain the actual weight corresponding to the preset color temperature zone includes:

obtaining the actual weight by using formula I based on the number of white points, the preset maximum number of white points, the preset minimum number of white points, the preset weight and a minimum value of preset weight corresponding to the preset color temperature zone;

formula I is as follows:

$$K_n^{'} = \begin{cases} K_n & , T_n \geq T_{max,n} \\ \dfrac{(K_n - K_{min,n}) * (T_n - T_{min,n})}{T_{max,n} - T_{min,n}} + K_{min,n} & , T_{max,n} > T_n \geq T_{min,n} \\ K_{min,n} & , T_n \leq T_{min,n} \end{cases}$$

in which $K_n$ is the actual weight corresponding to any preset color temperature zone n of preset color temperature zones, $K_n$ is the preset weight corresponding to the preset color temperature zone n, $K_{min,n}$ is the minimum value of preset weight corresponding to the preset color temperature zone n, $T_n$ is the number of white points corresponding to the preset color temperature zone n, $T_{min,n}$ is the preset minimum number of white points corresponding to the preset color temperature zone n, and $T_{max,n}$ is the preset maximum number of white points corresponding to the preset color temperature zone n.

In an embodiment, the obtaining the result pixel sum value based on the target pixel sum value and the actual weight includes:

obtaining the result pixel sum value by using formula II based on the target pixel sum value and the actual weight;

formula II is as follows:

$$SUM(R) = \frac{\sum_{i=1}^{N} K_n^{'} * SUM(R_n)}{\sum_{i=1}^{N} K_n^{'}}$$

$$SUM(G) = \frac{\sum_{i=1}^{N} K_n^{'} * SUM(G_n)}{\sum_{i=1}^{N} K_n^{'}}$$

$$SUM(B) = \frac{\sum_{i=1}^{N} K_n^{'} * SUM(B_n)}{\sum_{i=1}^{N} K_n^{'}}$$

in which SUM(R), SUM(G) and SUM(B) are a result red pixel sum value, a result green pixel sum value and a result blue pixel sum value in the result pixel sum value respectively, N is a quantity of the preset color temperature zones, $SUM(R_n)$ is a target red pixel sum value in the target pixel sum value corresponding to the preset color temperature zone n, $SUM(G_n)$ is a target green pixel sum value in the target pixel sum value corresponding to the preset color temperature zone n, and $SUM(B_n)$ is a target blue pixel sum value in the target pixel sum value corresponding to the preset color temperature zone n.

In an embodiment, the pixel gain value includes a red gain value, a green gain value and a blue gain value; the step of obtaining the pixel gain value based on the result pixel sum value includes:

in responding to that the result green pixel sum value is largest, determining a ratio of the result green pixel sum value to the result red pixel sum value as the red gain value, determining a ratio of the result green pixel sum value to the result blue pixel sum value as the blue gain value, and determining a first preset constant as the green gain value; or

in responding to that the result red pixel sum value is largest, determining a ratio of the result red pixel sum value to the result green pixel sum value as the green gain value, determining a ratio of the result red pixel sum value to the result blue pixel sum value as the blue gain value, and determining a second preset constant as the red gain value; or

in responding to that the result blue pixel sum value is largest, determining a ratio of the result blue pixel sum value to the result red pixel sum value as the red gain value, determining a ratio of the result blue pixel sum value to the result green pixel sum value as the green gain value, and determining a third preset constant as the blue gain value.

In addition, in order to achieve the above object, a white balance control apparatus is also provided in this application, including:

an acquisition module configured to acquire a target pixel value of a target white point in a target image;

a calculation module configured to calculate a target pixel sum value corresponding to a preset color temperature zone by using the target pixel value;

an obtaining module configured to obtain a pixel gain value based on the target pixel sum value and a preset weight corresponding to the preset color temperature zone; and

an adjustment module configured to perform white balance adjustment on the target image by using the pixel gain value to obtain a result image.

In addition, in order to achieve the above object, a terminal device is also provided in this application, including a memory, a processor, and a white balance control program stored in the memory and executable by the processor, and the white balance control program, when executed by the processor, implements the white balance control method as described in any one of the above embodiments.

In addition, in order to achieve the above object, a computer readable storage medium is also provided in this application, on which a white balance control program is stored, and the white balance control program, when executed by a processor, implements the steps of the white balance control method as described in any one of the above embodiments.

**Beneficial effects**

The technical solution of this application provides a white balance control method, the method including the following steps: acquiring a target pixel value of a target white point in a target image; calculating a target pixel sum value corresponding to a preset color temperature zone by using the target pixel value; obtaining a pixel gain value based on the target pixel sum value and a preset weight corresponding to the preset color temperature zone; and performing white balance adjustment on the target image by using the pixel gain value to obtain a result image.

In the existing methods, when there are interfering color blocks in the target image, the interfering color blocks will have negative effects on the adjustment of the target image, so that the obtained result image still has inaccurate white balance, resulting in color cast of the result image. In this application, the final pixel gain value is obtained based on the target pixel value of the target white point in the target image, and the target image is subjected to white balance adjustment by using the pixel gain value to obtain the result image, so the target pixel value will not be affected by the interfering color blocks in the target image, thus making the accuracy of the pixel gain value higher, and in turn making the white balance of the result image accurate and avoiding the color cast of the result image.

**BRIEF DESCRIPTION OF THE DRAWINGS**

In order to describe technical solutions in the embodiments of this application or in the related art more clearly, accompanying drawings to be used in the description of the embodiments or the related art will be introduced briefly below. Obviously, the accompanying drawings to be described below are merely some embodiments of this application, and a person of ordinary skill in the art may obtain other drawings according to the structures shown in these drawings without any creative work.

FIG. 1 is a schematic structural diagram of a terminal device in a hardware operating environment related to embodiments of this application.

FIG. 2 is a schematic flowchart of a first embodiment of a white balance control method of this application.

FIG. 3 is a schematic diagram of a target Planck color temperature curve of this application.

FIG. 4 shows a relationship between a preset color temperature zone and the target Planck color temperature curve of this application.

FIG. 5 is a structural block diagram of a first embodiment of a white balance control apparatus of this application.

The implement of the objects, functional characteristics and advantages of this application will be further explained with reference to the accompanying drawings in combination with the embodiments.

**DETAILED DESCRIPTION OF THE EMBODIMENTS**

The technical solutions in the embodiments of this application will be clearly and completely described below with reference to the accompanying drawings in the embodiments of this application. Obviously, the described embodiments are only part of the embodiments of this application, rather than all the embodiments. Based on the embodiments in this application, all other embodiments obtained by a person of ordinary skill in the art without creative work fall into the scope of this application.

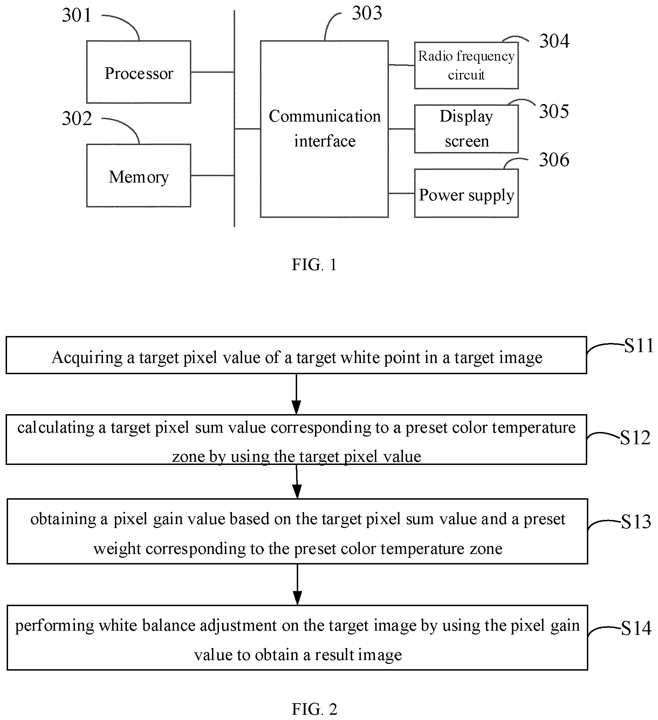

See FIG. 1, FIG. 1 is a schematic structural diagram of a terminal device in a hardware operating environment related to the embodiments of this application.

The terminal device may be a user equipment (UE) such as a mobile phone, a smart phone, a laptop, a digital broadcast receiver, a personal digital assistant (PDA), or a tablet (PAD), a hand-held device, a vehicle-mounted device, a wearable device, a computing device or other processing devices connected to a wireless modem, a Mobile station (MS) or the like. The terminal device may be known as a user terminal, a portable terminal, a desktop terminal, or the like.

Generally, the terminal device includes at least one processor 301, a memory 302, and a white balance control program stored in the memory and running on the processor, and the white balance control program is configured to implement the steps of the white balance control method as described above.

The processor 301 may include one or more processing cores, such as a 4-core processor, an 8-core processor, or the like. The processor 301 may be implemented in at least one hardware form of digital signal processing (DSP), field-programmable gate array (FPGA) and programmable logic array (PLA). The processor 301 may further include a main processor and a co-processor. The main processor is a processor for processing data in a wake-up state, and also know as central processing unit (CPU). The co-processor is a low-power processor for processing data in a standby state. In some embodiments, the processor 301 may be integrated with a graphics processing unit (GPU), which is used to be responsible for rendering and drawing the contents to be displayed on the display screen. The processor 301 may further include an artificial intelligence (AI) processor, which is used to process operations related to the white balance control method, so that the white balance control method model may be trained and learned autonomously to improve efficiency and accuracy.

The memory 302 may include one or more computer-readable storage media, which may be non-transitory. The memory 302 may also include a high-speed random access memory, and a non-volatile memory, such as one or more magnetic disk storage devices and flash memory storage devices. In some embodiments, the non-transitory computer readable storage medium in the memory 302 is used to store at least one instruction, which is used to be executed by the processor 301 to implement the white balance control method provided by the method embodiments in this application.

In some embodiments, the terminal device may further include a communication interface 303 and at least one peripheral device. The processor 301, the memory 302 and the communication interface 303 may be connected through a bus or a signal line. Each peripheral device may be connected with the communication interface 303 through a bus, a signal line or a circuit board. Specifically, the peripheral device includes at least one of a radio frequency circuit 304, a display screen 305 and a power supply 306.

The communication interface 303 may be used to connect at least one peripheral device related to input/output (I/O) to the processor 301 and the memory 302. In some embodiments, the processor 301, the memory 302 and the communication interface 303 are integrated on the same chip or circuit board. In some other embodiments, any one or two of the processor 301, the memory 302 and the communication interface 303 may be implemented on separated chips or circuit boards, which is not limited is this embodiment.

The radio frequency circuit 304 is used for receiving and transmitting radio frequency (RF) signals, which is also known as electromagnetic signals. The radio frequency circuit 304 communicates with the communication network and other communication devices through electromagnetic signals. The radio frequency circuit 304 converts an electrical signal into an electromagnetic signal for transmission, or converts the received electromagnetic signal into an electrical signal. Optionally, the radio frequency circuit 304 includes an antenna system, an RF transceiver, one or more amplifiers, a tuner, an oscillator, a digital signal processor, a codec chipset, a subscriber identity module card, and the like. The radio frequency circuit 304 may communicate with other terminals through at least one wireless communication protocol. The wireless communication protocol includes, but is not limited to, metropolitan area network, various mobile communication networks (2G, 3G, 4G and 5G), wireless local area network and/or wireless fidelity (WiFi) network. In some embodiments, the radio frequency circuit 304 may further include a circuit related to near field communication (NFC), which is not limited in this application.

The display screen 305 is used to display a user interface (UI). The UI may include graphics, text, icon, video and any combination thereof. When the display screen 305 is a touch display screen, the display screen 305 also has the ability to collect the touch signal on or above the surface of the display screen 305. The touch signal may be input to the processor 301 as an control signal for processing. At this time, the display screen 305 may also be used to provide a virtual button and/or a virtual keyboard, also known as a soft button and/or a soft keyboard. In some embodiments, the display screen 305 may be a front panel of an electronic equipment. In other embodiments, there may be at least two display screens 305, which are respectively arranged on different surfaces of the electronic equipment or in a folding design. In other embodiments, the display screen 305 may be a flexible display screen, which is arranged on a curved surface or a folded surface of the electronic equipment. Even, the display screen 305 may be set as a non-rectangular irregular shape, that is, a profiled screen. The display screen 305 may be made of liquid crystal display (LCD), organic light-emitting diode (OLED) and other materials.

The power supply 306 may be used to supply power to various assemblies in the electronic equipment. The power source 306 may be AC, DC, disposable battery or rechargeable battery. When the power supply 306 includes a rechargeable battery, the rechargeable battery may support wired charging or wireless charging. The rechargeable battery may also be used to support fast charging technology.

Those skilled in the art may understand that the structure shown in FIG. 1 does not constitute a limitation on the terminal device, and may include more or less components than those shown, or combine some components, or include different component arrangements.

In addition, the embodiment of this application also provides a computer readable storage medium, on which a white balance control program is stored, and the white balance control program, when executed by a processor, implements the steps of the white balance control method as described above. Therefore, the white balance control method will not be repeated here. In addition, the beneficial effects achieved by using the same method will not be repeated. For the technical details not disclosed in the embodiment of the computer readable storage medium related to this application, please refer to the description of the method embodiment of this application. As an example, the program instructions may be deployed to be executed on one terminal device, or on a plurality of terminal devices located in one place, or on a plurality of terminal devices distributed in a plurality of places and interconnected by a communication network.

A person of ordinary skill in the art may understand that all or part of the processes for implementing the embodiments of the above methods may be completed by instructing related hardware via the computer program, and the above program may be stored in a computer-readable storage medium, and when executed, the program may include the processes of the embodiments of the above methods. The computer readable storage medium may be a magnetic disk, an optical disk, a read only memory (ROM), a random access memory (RAM), or the like.

Based on the above hardware structure, an embodiment of the white balance control method of this application is provided.

Refer to FIG. 2, FIG. 2 is a schematic flowchart of a first embodiment of a white balance control method of this application. The method, which is applied to a terminal device, includes the following steps:

S11: acquiring a target pixel value of a target white point in a target image.

It should be noted that a subject for implementing this application is a terminal device, the mechanism of which is described above and thus will not be repeated here. The terminal device is installed with a white balance control program, and when the terminal device executes the white balance control program, the steps of the white balance control method of this application are implemented.

The target image is an image for which the white balance is to be adjusted. The target image may be an image already taken by a target camera (such as a camera configured to shoot the target image), an image being scanned by the target camera (for example, scanning a QR code), or an image being prepared to be shot by the target camera (the target camera is turned on, and the user sees the image through the target camera, and the user does not press the shutter release button at this time). The target camera may be a camera built into the terminal device, or a camera connected to the terminal device.

Further, the target image is acquired by a target camera, and before the step of acquiring the target pixel value of the target white point in the target image, the method further includes: performing curve calibration and fitting on the target camera by using a preset color temperature lamp corresponding to a preset color temperature range to obtain a target Planck color temperature curve of the target camera; obtaining a preset color temperature zone based on the target Planck color temperature curve. Accordingly, the step of acquiring the target pixel value of the target white point in the target image includes: determining a pixel point in the target image whose pixel value matches the target Planck color temperature curve as the target white point; and acquiring the target pixel value of the target white point.

It should be noted that the preset color temperature range may be a color temperature range with a color temperature value of 1800 K to 10000 K. Generally, in order to obtain the Planck color temperature curve corresponding to the preset color temperature range, it is necessary to select a plurality of preset color temperature lamps (for example, D65 color temperature lamps with a color temperature value of 6500 K, D50 color temperature lamps with a color temperature value of 5000 K, TL40 color temperature lamps with a color temperature value of 4000 K, F color temperature lamps with a color temperature value of 2700 K) to perform curve calibration and fitting on the target camera to obtain the Planck color temperature curve of the target camera, namely the target Planck color temperature curve. For a target camera, the step of performing curve calibration and fitting on the target camera by using the preset color temperature lamp corresponding to the preset color temperature range is carried out only once to obtain the target Planck color temperature curve of the target camera. For a plurality of target cameras, curve calibration and fitting are carried out on each target camera by using the preset color temperature lamp corresponding to the preset color temperature range to obtain the respective target Planck color temperature curves of the target cameras.

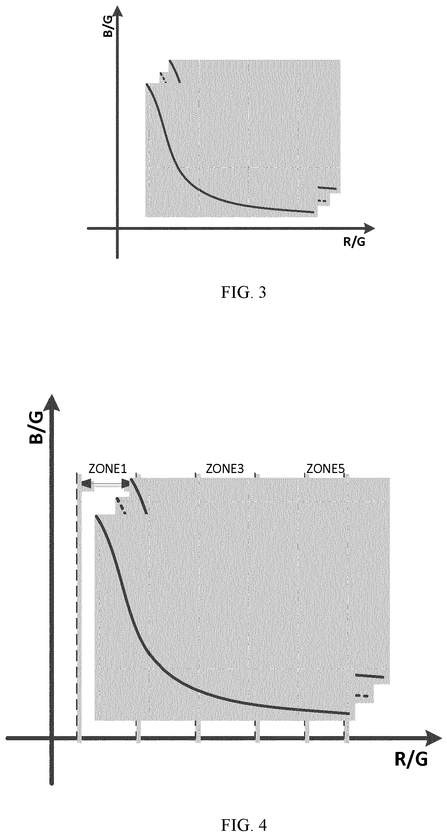

Refer to FIG. 3, which is a schematic diagram of the target Planck color temperature curve of this application, the dotted line part represents the target Planck color temperature curve, and the solid line part represents the color temperature space threshold which may be set by the user based on the requirements and is not limited in this application.

In this application, the preset color temperature zones may be obtained based on the target Planck color temperature curve, and the number of the preset color temperature zones is preferably selected as five.

Refer to FIG. 4, FIG. 4 shows a relationship between the preset color temperature zone and the target Planck color temperature curve. In FIG. 3, the effective area of the target Planck color temperature curve is divided into five preset color temperature zones: ZONE1-ZONE5, in which the area covered by ZONE1-ZONE5 is the effective area, and the areas outside ZONE1-ZONE5 are the non-effective areas and thus do not have to be selected. The color temperature range of ZONE1 is 1800 K to 2700 K, the color temperature range of ZONE2 is 2700 K to 4000 K, the color temperature range of ZONE 3 is 4000 K to 5500 K, the color temperature range of ZONE 4 is 5500 K to 7500 K, and the color temperature range of ZONE 5 is 7500 K to 10000 K.

The pixel value of each pixel point in the target image needs to be acquired, and the pixel point whose pixel value matches the target Planck color temperature curve is determined as the target white point. Matching the pixel value of a pixel point with the target Planck color temperature curve means that the pixel value of the pixel point falls within the range of the color temperature space threshold in the target Planck color temperature curve, and the pixel value falls in the effective area of the target Planck color temperature curve (for example, the area set corresponding to the five areas of ZONE1-ZONE5 as above). The pixel value of the target white point needs to be acquired.

S12: calculating a target pixel sum value corresponding to a preset color temperature zone by using the target pixel value.

It should be noted that in this application, each preset color temperature zone corresponds to a number of target white points. For a preset color temperature zone, the pixel values of all target white points included in the preset color temperature zone need to be summed to obtain a target pixel sum value.

It should be understood that for a preset color temperature zone, the target pixel sum value includes a target red pixel sum value, a target blue pixel sum value and a target green pixel sum value. That is to say, for this preset color temperature zone, it is necessary to calculate the blue pixel sum value of all target white points, the red pixel sum value of all target white points, and the green pixel sum value of all target white points.

For example, if the ZONE1 area includes 100 target white points, the red pixel value of the 100 white points need to be summed to obtain the red pixel sum value of the ZONE1 area, and similarly, the green pixel sum value of the ZONE1 area and the blue pixel sum value of the ZONE1 area are also obtained.

S13: obtaining a pixel gain value based on the target pixel sum value and a preset weight corresponding to the preset color temperature zone.

It should be noted that the preset weight includes a red preset weight, a blue preset weight and a green preset weight. Correspondingly, the pixel gain value includes a green pixel gain value, a red pixel gain value and a blue pixel gain value. For a preset color temperature zone, the red pixel gain value needs to be obtained based on the red pixel sum value and the red preset weight of the preset color temperature zone. Similarly, the green pixel gain value needs to be obtained based on the green pixel sum value and the green preset weight of the preset color temperature zone, and the blue pixel gain value needs to be obtained based on the blue pixel sum value and the blue preset weight of the preset color temperature zone. However, for a plurality of preset color temperature zones, step S11 is required for each preset color temperature zone to obtain the pixel gain value corresponding to each preset color temperature zone.

According to the conventional application environment, referring to the settings of ZONE1-ZONE5 as above, the preset weight of ZONE4 is the highest, followed by that of ZONE5, followed by that of ZONE3, and then followed by that of ZONE2, and finally ZONE1. The preset weights of the ZONE1-ZONE5 may be set as $K_n$ (n is a natural number of 1 to 5), and then the minimum value of the preset weights of ZONE1-ZONE5 is $K_{min,n}$. The sum of preset weights corresponding to the plurality of preset color temperature zones may be equal to 1. If the target white points in a preset color temperature range are not considered at all, all the corresponding preset weights should be set to 0.

Further, before the step of obtaining the pixel gain value based on the target pixel sum value and the preset weight corresponding to the preset color temperature zone, the method further includes: counting a number of white points of the target white points in the preset color temperature zone; and adjusting the preset weight by using the number of white points, a preset maximum number of white points and a preset minimum number of white points to obtain an actual weight corresponding to the preset color temperature zone. Accordingly, the step of obtaining the pixel gain value based on the target pixel sum value and the preset weight corresponding to the preset color temperature zone includes: obtaining a pixel gain value based on the target pixel sum value and the actual weight.

It should be noted that the preset weight needs to be adjusted based on the number of white points corresponding to the target image, and the red preset weight, blue preset weight and green preset weight all need to be adjusted.

In particular, the step of adjusting the preset weight by using the number of white points, the preset maximum number of white points and the preset minimum number of white points to obtain the actual weight corresponding to the preset color temperature zone includes:

obtaining the actual weight by using formula I based on the number of white points, the preset maximum number of white points, the preset minimum number of white points, the preset weight and a minimum value of preset weight corresponding to the preset color temperature zone;

formula I is as follows:

$$
K_n' = \begin{cases} K_n & ,T_n \geq T_{max,n} \\ \dfrac{(K_n - K_{min,n}) * (T_n - T_{min,n})}{T_{max,n} - T_{min,n}} + K_{min,n} & ,T_{max,n} > T_n \geq T_{min,n} \\ K_{min,n} & ,T_n \leq T_{min,n} \end{cases}
$$

in which $K_n'$ is the actual weight corresponding to any preset color temperature zone n of the preset color temperature zones, $K_n$ is the preset weight corresponding to the preset color temperature zone n, $K_{min,n}$ is the minimum value of preset weight corresponding to the preset color temperature zone n, $T_n$ is the number of white points corresponding to the preset color temperature zone n, $T_{min,n}$ is the preset minimum number of white points corresponding to the preset color temperature zone n, and $T_{max,n}$ is the preset maximum number of white points corresponding to the preset color temperature zone n.

It should be noted that, in this application, the red preset weight, the blue preset weight and the green preset weight in the preset weight are the same, that is, the preset weight $K_n$, and similarly, the calculated actual weight $K_n$ and the minimum value of preset weight $K_{min,n}$ corresponding to the red, blue and green weights are the same. In addition, the preset maximum number of white points $T_{max,n}$ and the preset minimum number of white points $T_{min,n}$ for a preset color temperature zone are determined based on the size of the actual target image and the proportion of the target white points in the preset color temperature zone.

It should be understood that, if five preset color temperature zones (ZONE1-ZONE5) are set according to the above contents, five actual weights need to be obtained, and the pixel gain value is obtained based on the five actual weights and the target pixel sum value of the target white point.

In particular, the step of obtaining the pixel gain value based on the target pixel sum value and the actual weight includes: obtaining a result pixel sum value based on the target pixel sum value and the actual weight; and obtaining the pixel gain value based on the result pixel sum value.

The step of obtaining the result pixel sum value based on the target pixel sum value and the actual weight includes: obtaining the result pixel sum value by using formula II based on the target pixel sum value and the actual weight;

formula II is as follows:

$$SUM(R) = \frac{\sum_{i=1}^{N} K_n' * SUM(R_n)}{\sum_{i=1}^{N} K_n'}$$

$$SUM(G) = \frac{\sum_{i=1}^{N} K_n' * SUM(G_n)}{\sum_{i=1}^{N} K_n'}$$

$$SUM(B) = \frac{\sum_{i=1}^{N} K_n' * SUM(B_n)}{\sum_{i=1}^{N} K_n'}$$

in which SUM(R), SUM(G) and SUM(B) are a result red pixel sum value, a result green pixel sum value and a result blue pixel sum value in the result pixel sum value respectively, N is the number of preset color temperature zones, $SUM(R_n)$ is a target red pixel sum value in the target pixel sum value corresponding to the preset color temperature zone n, $SUM(G_n)$ is a target green pixel sum value in the target pixel sum value corresponding to the preset color temperature zone n, and $SUM(B_n)$ is a target blue pixel sum value in the target pixel sum value corresponding to the preset color temperature zone n.

It should be noted that the target pixel sum value includes the target pixel sum value corresponding to each preset color temperature zone. For a preset color temperature zone, the target pixel sum value includes a target red pixel sum value, a target green pixel sum value and a target blue pixel sum value. A result red pixel sum value, a result blue pixel sum value and a result green pixel sum value corresponding to all preset color temperature zones should be obtained according to formula II.

The result red pixel sum value, the result blue pixel sum value and the result green pixel sum value are obtained in the manner described above, and the pixel gain value is obtained based on the result red pixel sum value, the result blue pixel sum value and the result green pixel sum value, in which the pixel gain value includes a red gain value, a green gain value and a blue gain value. The step of obtaining the pixel gain value based on the result pixel sum value includes:

if the result green pixel sum value is the largest, determining a ratio of the result green pixel sum value to the result red pixel sum value as the red gain value, determining a ratio of the result green pixel sum value to the result blue pixel sum value as the blue gain value, and determining a first preset constant as the green gain value; or

if the result red pixel sum value is the largest, determining a ratio of the result red pixel sum value to the result green pixel sum value as the green gain value, determining a ratio of the result red pixel sum value to the result blue pixel sum value as the blue gain value, and determining a second preset constant as the red gain value; or

if the result blue pixel sum value is the largest, determining a ratio of the result blue pixel sum value to the result red pixel sum value as the red gain value, determining a ratio of the result blue pixel sum value to the result green pixel sum value as the green gain value, and determining a third preset constant as the blue gain value.

Step S14: performing white balance adjustment on the target image by using the pixel gain value to obtain a result image.

After the red gain value, the green gain value and the blue gain value are obtained, all pixel values of the target image may be adjusted by using the red gain value, the green gain value and the blue gain value, so as to realize the white balance adjustment of the target image, and the final adjusted result image may be obtained without color cast.

The technical solution of this application provides a white balance control method, the method including the following steps: acquiring a target pixel value of a target white point in a target image; calculating a target pixel sum value corresponding to a preset color temperature zone by using the target pixel value; obtaining a pixel gain value based on the target pixel sum value and a preset weight corresponding to the preset color temperature zone; and performing white balance adjustment on the target image by using the pixel gain value to obtain a result image.

In the existing methods, when there are interfering color blocks in the target image, the interfering color blocks will have negative effects on the adjustment of the target image, so that the obtained result image still has inaccurate white balance, resulting in color cast of the result image. In this application, the final pixel gain value is obtained based on the target pixel value of the target white point in the target image, and the target image is subjected to white balance adjustment by using the pixel gain value to obtain the result image, so the target pixel value will not be affected by the interfering color blocks in the target image, thus making the accuracy of the pixel gain value higher, and in turn making the white balance of the result image accurate and avoiding the color cast of the result image.

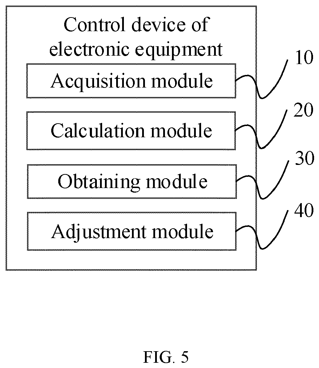

Refer to FIG. 5, which is a structural block diagram of a first embodiment of a white balance control apparatus of this application, the apparatus is used in a terminal device, and based on the same application concept as the previous embodiment, the apparatus includes:

an acquisition module 10 configured to acquire a target pixel value of a target white point in a target image;

a calculation module 20 configured to calculate a target pixel sum value corresponding to a preset color temperature zone by using the target pixel value;

an obtaining module 30 configured to obtain a pixel gain value based on the target pixel sum value and a preset weight corresponding to the preset color temperature zone; and

an adjustment module 40 configured to perform white balance adjustment on the target image by using the pixel gain value to obtain a result image.

It should be noted that, since the steps performed by the device of this embodiment are the same as those of the previous method embodiments, the specific implementation and the technical effects that may be achieved may be referred to the previous embodiments and will not be repeated here.

The above-mentioned embodiments are only optional embodiments of this application, and do not limit the protection scope of this application. All equivalent changes made by using the contents of the specification and drawings of this application, or direct/indirect application in other related technical fields under the concept of this application are included in the protection scope of this application.

**Claims**

1. A white balance control method, comprising:

acquiring a target pixel value of a target white point in a target image;
calculating a target pixel sum value corresponding to a preset color temperature zone by using the target pixel value;

obtaining a pixel gain value based on the target pixel sum value and a preset weight corresponding to the preset color temperature zone; and

performing white balance adjustment on the target image by using the pixel gain value to obtain a result image.

2. The method according to claim 1, wherein the target image is acquired by a target camera, and before the acquiring the target pixel value of the target white point in the target image, the method further comprises:

performing curve calibration and fitting on the target camera by using a preset color temperature lamp corresponding to a preset color temperature range to obtain a target Planck color temperature curve of the target camera; and

obtaining the preset color temperature zone based on the target Planck color temperature curve,

the acquiring the target pixel value of the target white point in the target image comprises:

determining a pixel point in the target image whose pixel value matches the target Planck color temperature curve as the target white point; and

acquiring the target pixel value of the target white point.

3. The method according to claim 2, wherein before the obtaining the pixel gain value based on the target pixel sum value and the preset weight corresponding to the preset color temperature zone, the method further comprises:

counting a number of white points of target white points in the preset color temperature zone; and

adjusting the preset weight by using the number of white points, a preset maximum number of white points and a preset minimum number of white points to obtain an actual weight corresponding to the preset color temperature zone,

the obtaining the pixel gain value based on the target pixel sum value and the preset weight corresponding to the preset color temperature zone comprises:

obtaining a pixel gain value based on the target pixel sum value and the actual weight.

4. The method according to claim 3, wherein the obtaining the pixel gain value based on the target pixel sum value and the actual weight comprises:

obtaining a result pixel sum value based on the target pixel sum value and the actual weight; and

obtaining the pixel gain value based on the result pixel sum value.

5. The method according to claim 4, wherein the adjusting the preset weight by using the number of white points, the preset maximum number of white points and the preset minimum number of white points to obtain the actual weight corresponding to the preset color temperature zone comprises:

obtaining the actual weight by using formula I based on the number of white points, the preset maximum number of white points, the preset minimum number of white points, the preset weight and a minimum value of preset weight corresponding to the preset color temperature zone;

wherein formula I is as follows:

$$
K'_n = \begin{cases} K_n & , T_n \geq T_{max,n} \\ \dfrac{(K_n - K_{min,n}) * (T_n - T_{min,n})}{T_{max,n} - T_{min,n}} + K_{min,n} & , T_{max,n} > T_n \geq T_{min,n} \\ K_{min,n} & , T_n \leq T_{min,n} \end{cases}
$$

wherein $K_n$ is the actual weight corresponding to any preset color temperature zone n of preset color temperature zones, $K_n$ is the preset weight corresponding to the preset color temperature zone n, $K_{min,n}$ is the minimum value of preset weight corresponding to the preset color temperature zone n, $T_n$ is the number of white points corresponding to the preset color temperature zone n, $T_{min,n}$ is the preset minimum number of white points corresponding to the preset color temperature zone n, and $T_{max,n}$ is the preset maximum number of white points corresponding to the preset color temperature zone n.

6. The method according to claim 5, wherein the obtaining the result pixel sum value based on the target pixel sum value and the actual weight comprises:

obtaining the result pixel sum value by using formula II based on the target pixel sum value and the actual weight; wherein formula **II** is as follows:

$$SUM(R) = \frac{\sum_{i=1}^{N} K_n' * SUM(R_n)}{\sum_{i=1}^{N} K_n'}$$

$$SUM(G) = \frac{\sum_{i=1}^{N} K_n' * SUM(G_n)}{\sum_{i=1}^{N} K_n'}$$

$$SUM(B) = \frac{\sum_{i=1}^{N} K_n' * SUM(B_n)}{\sum_{i=1}^{N} K_n'}$$

wherein SUM(R), SUM(G) and SUM(B) are a result red pixel sum value, a result green pixel sum value and a result blue pixel sum value in the result pixel sum value respectively, **N** is a quantity of the preset color temperature zones, $SUM(R_n)$ is a target red pixel sum value in the target pixel sum value corresponding to the preset color temperature zone n, $SUM(G_n)$ is a target green pixel sum value in the target pixel sum value corresponding to the preset color temperature zone n, and $SUM(B_n)$ is a target blue pixel sum value in the target pixel sum value corresponding to the preset color temperature zone n.

7. The method according to claim 6, wherein the pixel gain value comprises a red gain value, a green gain value and a blue gain value, and the obtaining the pixel gain value based on the result pixel sum value comprises:

in responding to that the result green pixel sum value is largest, determining a ratio of the result green pixel sum value to the result red pixel sum value as the red gain value, determining a ratio of the result green pixel sum value to the result blue pixel sum value as the blue gain value, and determining a first preset constant as the green gain value; or
in responding to that the result red pixel sum value is largest, determining a ratio of the result red pixel sum value to the result green pixel sum value as the green gain value, determining a ratio of the result red pixel sum value to the result blue pixel sum value as the blue gain value, and determining a second preset constant as the red gain value; or
in responding to that the result blue pixel sum value is largest, determining a ratio of the result blue pixel sum value to the result red pixel sum value as the red gain value, determining a ratio of the result blue pixel sum value to the result green pixel sum value as the green gain value, and determining a third preset constant as the blue gain value.

8. The method according to claim 6, wherein calculating the target pixel sum value corresponding to the preset color temperature zone by using the target pixel value comprises:

each preset color temperature zone corresponds to a number of target white points; and
for each preset color temperature zone, pixel values of all target white points comprised in the preset color temperature zone are summed to obtain the target pixel sum value, the target pixel sum value comprising a target red pixel sum value, a target blue pixel sum value and a target green pixel sum value.

9. The method according to claim 6, wherein the preset color temperature range is a color temperature range with a color temperature value of 1800 K to 10000 K.

10. The method according to claim 5, wherein the red preset weight, the blue preset weight and the green preset weight in the preset weight are same, and weights $K_n$ and minimum values of preset weights $K_{min,n}$ corresponding to red, blue and green are the same.

**11.** The method according to claim 5, wherein the preset maximum number of white points $T_{max,n}$ and the preset minimum number of white points $T_{min,n}$ for the preset color temperature zone are determined based on a size of an actual target image and a proportion of the target white points in the preset color temperature zone.

**12.** The method according to claim 5, wherein a plurality of preset color temperature lamps are selected to perform curve calibration and fitting on the target camera to obtain the Planck color temperature curve of the target camera; and the preset color temperature zone is obtained based on the target Planck color temperature curve.

**13.** A white balance control device, comprising:

an acquisition module configured to acquire a target pixel value of a target white point in a target image;
a calculation module configured to calculate a target pixel sum value corresponding to a preset color temperature zone by using the target pixel value;
an obtaining module configured to obtain a pixel gain value based on the target pixel sum value and a preset weight corresponding to the preset color temperature zone; and
an adjustment module configured to perform white balance adjustment on the target image by using the pixel gain value to obtain a result image.

**14.** A terminal device, comprising a memory, a processor, and a white balance control program stored in the memory and executable by the processor, wherein the white balance control program, when executed by the processor, implements the white balance control method according to any one of the claims 1-12.

**15.** A computer readable storage medium, wherein a white balance control program is stored on the computer readable storage medium, and the white balance control program, when executed by a processor, implements the white balance control method according to any one of the claims 1-12.

FIG. 1

| | |
|---|---|
| Acquiring a target pixel value of a target white point in a target image | S11 |

| | |
|---|---|
| calculating a target pixel sum value corresponding to a preset color temperature zone by using the target pixel value | S12 |

| | |
|---|---|
| obtaining a pixel gain value based on the target pixel sum value and a preset weight corresponding to the preset color temperature zone | S13 |

| | |
|---|---|
| performing white balance adjustment on the target image by using the pixel gain value to obtain a result image | S14 |

FIG. 2

FIG. 3

FIG. 4

Control device of
electronic equipment

| Acquisition module | 10 |
| Calculation module | 20 |
| Obtaining module | 30 |
| Adjustment module | 40 |

FIG. 5

## INTERNATIONAL SEARCH REPORT

| International application No. |
| --- |
| **PCT/CN2021/132137** |

### A. CLASSIFICATION OF SUBJECT MATTER

H04N 9/73(2006.01)i

According to International Patent Classification (IPC) or to both national classification and IPC

### B. FIELDS SEARCHED

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNTXT; WPABS; WPABSC; VEN; ENTXT; ENTXTC; CJFD: 白平衡, 增益, 色温, 白点, 像素, 调整, 调节, 计算, 权重, 权值, 普朗克, 数量, white, balance, gain, color, colour, temperature, point, pixel, adjust, calculate, weight, planckian, amount, number, quantity

### C. DOCUMENTS CONSIDERED TO BE RELEVANT

| Category* | Citation of document, with indication, where appropriate, of the relevant passages | Relevant to claim No. |
| --- | --- | --- |
| PX | CN 113676716 A (SHENZHEN SKYWORTH-RGB ELECTRONICS CO., LTD.) 19 November 2021 (2021-11-19) claims 1-10 and description, paragraphs [0070]-[0117] | 1-15 |
| X | CN 105959662 A (SHENZHEN INFINOVA LIMITED) 21 September 2016 (2016-09-21) description, paragraphs [0150]-[0356] | 1-4, 13-15 |
| A | US 2015271460 A1 (SAMSUNG TECHWIN CO., LTD.) 24 September 2015 (2015-09-24) entire document | 1-15 |
| A | CN 108377372 A (TP-LINK TECHNOLOGIES CO., LTD.) 07 August 2018 (2018-08-07) entire document | 1-15 |
| A | CN 107483908 A (GOERTEK TECHNOLOGY CO., LTD.) 15 December 2017 (2017-12-15) entire document | 1-15 |
| A | CN 110876049 A (ZHEJIANG UNIVIEW TECHNOLOGIES CO., LTD.) 10 March 2020 (2020-03-10) entire document | 1-15 |
| A | US 2019045163 A1 (INTEL CORP.) 07 February 2019 (2019-02-07) entire document | 1-15 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **06 April 2022** | **05 May 2022** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| | International application No. |
|---|---|
| | **PCT/CN2021/132137** |

| Patent document cited in search report | | | Publication date (day/month/year) | Patent family member(s) | | | Publication date (day/month/year) |
|---|---|---|---|---|---|---|---|
| CN | 113676716 | A | 19 November 2021 | None | | | |
| CN | 105959662 | A | 21 September 2016 | CN | 105959662 | B | 24 November 2017 |
| US | 2015271460 | A1 | 24 September 2015 | CN | 104935903 | A | 23 September 2015 |
| | | | | KR | 20150108687 | A | 30 September 2015 |
| | | | | US | 9420247 | B2 | 16 August 2016 |
| | | | | CN | 104935903 | B | 15 June 2018 |
| | | | | KR | 2170686 | B1 | 27 October 2020 |
| CN | 108377372 | A | 07 August 2018 | CN | 108377372 | B | 29 October 2019 |
| CN | 107483908 | A | 15 December 2017 | None | | | |
| CN | 110876049 | A | 10 March 2020 | CN | 110876049 | B | 28 December 2021 |
| US | 2019045163 | A1 | 07 February 2019 | DE | 102019213184 | A1 | 02 April 2020 |
| | | | | US | 10791310 | B2 | 29 September 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110971603